# EUROPEAN PATENT SPECIFICATION

(11) **EP 4 220 337 B1**
(45) Date of publication and mention of the grant of the patent: **26.11.2025**
(21) Application number: 21889366.7
(22) Date of filing: 13.09.2021
(51) Int. Cl.: G06F 1/16, G09F 9/30

(54) **ELECTRONIC DEVICE INCLUDING DISPLAY ROLLING GUIDE STRUCTURE**
ELEKTRONISCHE VORRICHTUNG MIT ANZEIGEROLLFÜHRUNGSSTRUKTUR
DISPOSITIF ÉLECTRONIQUE COMPRENANT UNE STRUCTURE DE GUIDAGE À ROULEMENT D'ÉCRAN

(30) Priority: 05.11.2020 KR 20200146771
(43) Date of publication of application: 02.08.2023
(73) Proprietor: Samsung Electronics Co., Ltd., Suwon-si, Gyeonggi-do 16677 (KR)
(72) Inventor: JUNG, Minsu, Suwon-si, Gyeonggi-do 16677 (KR); YOO, Minwoo, Suwon-si, Gyeonggi-do 16677 (KR)
(74) Representative: Gulde & Partner
(86) International application number: PCT/KR2021/012396
(87) International publication number: WO 2022/097901

(56) References cited:
- CN-A- 111 383 538
- CN-A- 111 833 743
- KR-A- 20190 101 605
- KR-A- 20190 119 719
- KR-A- 20200 099 455
- KR-A- 20200 117 741
- US-A1- 2019 297 736
- US-A1- 2020 337 159
- US-A1- 2022 124 920

## Description

### [Technical Field]

The present invention relates to an electronic device including a display rolling guide structure.

### [Background Art]

Electronic devices are gradually becoming slimmer, rigidity is being increased, design aspects are being strengthened, and at the same time functional elements are being developed to be differentiated. Electronic devices are moving away from uniform rectangular shapes and are gradually being transformed into a variety of shapes. The electronic device may have a deformable structure capable of using a large screen display while being convenient to carry. For example, as part of a deformable structure, the electronic device may have a structure (e.g., a rollable structure) capable of expanding a display area through a coupling structure of housings that operate in a sliding manner and a flexible display supported by the housing structure. Such an electronic device may require a support structure for supporting and guiding the flexible display at the time of transitioning to a slide-in state and/or slide-out state. The US 2019/297736 A1 discloses a flexible display device including a flexible screen wherein the flexible screen first slidably with a support base that is between the flexible screen and a casing. The CN 111 833 743 A and the CN 111 383 538 A disclose flexible display devices comprising a reel and a flexible display module that can be rolled and unfolded about the reel.

### [Disclosure of Invention]

### [Technical Problem]

An electronic device may include a deformable slidable electronic device (e.g., a rollable electronic device) capable of expanding a display area when used. The slidable electronic device may include a housing (e.g., a first housing, a base housing, or a base bracket) and a slide structure (e.g., a second housing, a slide housing, or a slide bracket) that are flexibly coupled to each other in an at least partially fitted together manner. For example, the slide structure may change the display area of the flexible display by being slid into or out of the housing in a designated direction and at a designated reciprocating distance. The slide structure may support at least a portion of a flexible display (flexible display or expandable display), may be coupled to operate in a manner sliding at least partially from the housing, and may induce change of the display area of the flexible display by being manually slid in or out by a user, or being transitioned to a slide-in state or a slide-out state automatically through an internal driving mechanism.

The slidable electronic device may be operated in a manner of accommodating at least a portion of the flexible display into an inner space of the housing in a slide-in state. In this case, since a portion of the flexible display slid into the inner space of the housing maintains an unfolded state, securing a mounting space for other electronic components may be affected.

### [Solution to Problem]

According to the invention, an electronic device according to appended claim 1 is provided.

Preferred embodiments are defined in the dependent claims.

### [Advantageous Effects of Invention]

A display rolling guide structure according to exemplary embodiments of the present disclosure may help to secure an efficient mounting space for other electronic components in the inner space of the housing in the case that the electronic device is transitioned from a slide-out state to a slide-in state by guiding a part of the flexible display accommodated in the inner space of the housing in a rolling manner, and it may help to perform a smooth rolling motion by regulating the force for the flexible display to unfold.

In addition to this, various effects identified directly or indirectly through this document may be provided.

### [Brief Description of Drawings]

In connection with the description of the drawings, the same or similar reference numerals may be used for the same or similar elements.

In connection with the description of the drawings, the same or similar reference numerals may be used for the same or similar elements.
FIG. 1 is a block diagram of an electronic device in a network environment according to various embodiments of the present disclosure.
FIGS. 2a and 2b are front surface perspective views of an electronic device illustrating a slide-in state and a slide-out state according to various embodiments of the present disclosure.
FIGS. 3a and 3b are rear surface perspective views of an electronic device illustrating a slide-in state and a slide-out state according to various embodiments of the present disclosure.
FIGS. 4a and 4b are schematic configuration diagrams of an electronic device illustrating a slide-in state and a slide-out state through a rolling guide structure according to various embodiments of the present disclosure.
FIGS. 5a to 5g are perspective views illustrating a coupling process of a rolling guide structure according to various embodiments of the present disclosure.
FIGS. 6a and 6b are operation diagrams illustrating a rolling operation of a flexible display through a rolling guide structure in a slide-in state and a slide-out state of an electronic device according to various embodiments of the present disclosure.
FIG. 7 is a diagram illustrating electronic components disposed between a housing and a rear surface cover according to various embodiments of the present disclosure.
FIGS. 8a and 8b are operation diagrams illustrating a rolling operation of a flexible display through a rolling guide structure in a slide-in state and a slide-out state of an electronic device according to various embodiments of the present disclosure.
FIG. 9 is a partial cross-sectional view of an electronic device including a rolling guide structure according to various embodiments of the present disclosure.

### [Mode for the Invention]

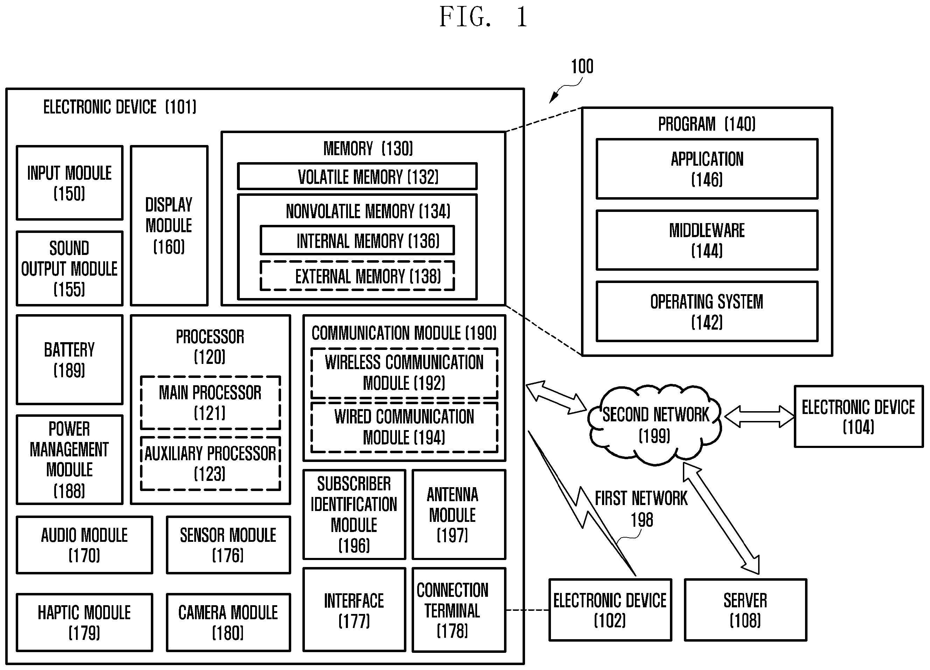

FIG. 1 is a block diagram illustrating an electronic device 101 in a network environment 100 according to various embodiments.

With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, For example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 may include the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, For example, software (e.g., the program 140) and input data or output data for a command related thererto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, For example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management inte.g.,rated circuit (PMIC).

The battery 189 may supply power to at least one component of the electronic device 101. According to an embodiment, the battery 189 may include, For example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a le.g.,acy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency inte.g.,rated circuit (RFIC)) other than the radiating element may be additionally formed as part of the antenna module 197.

According to various embodiments, the antenna module 197 may form ammWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

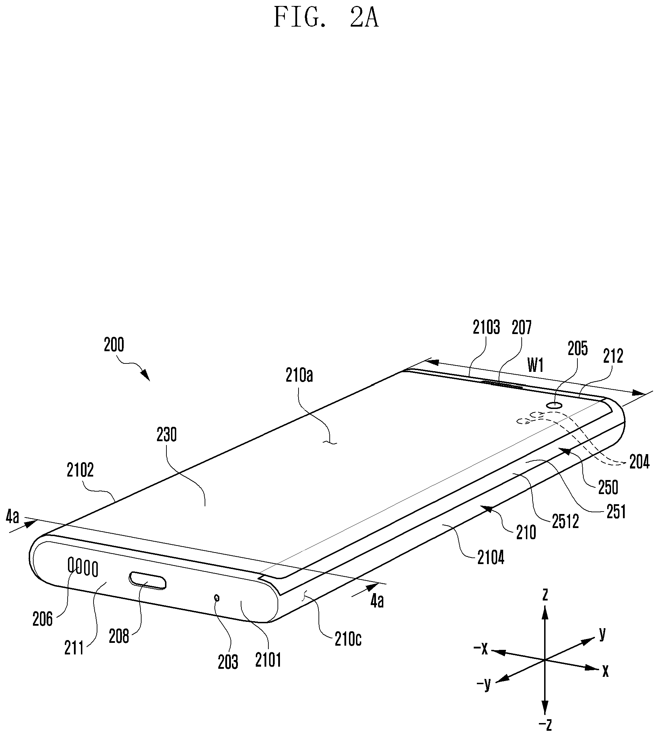

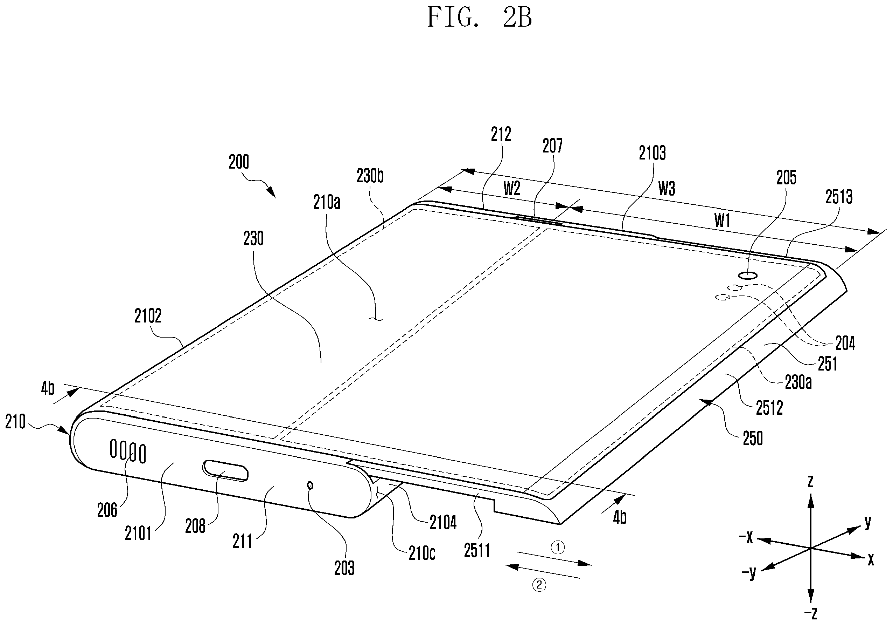

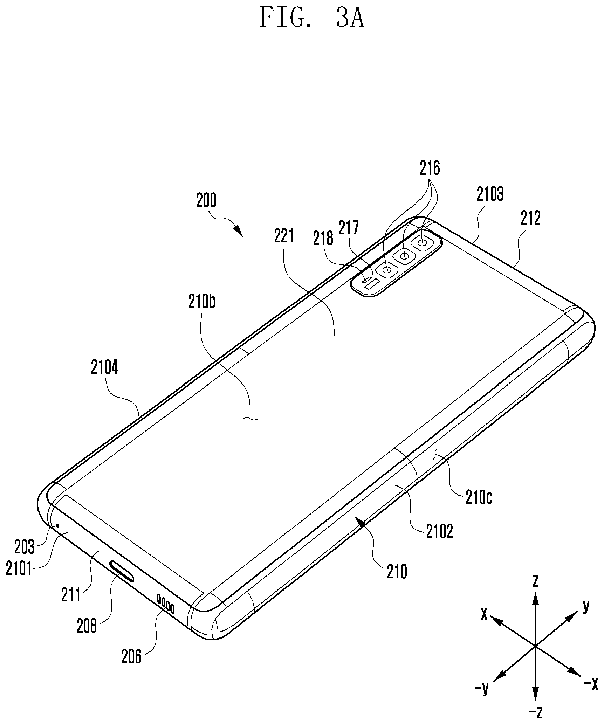

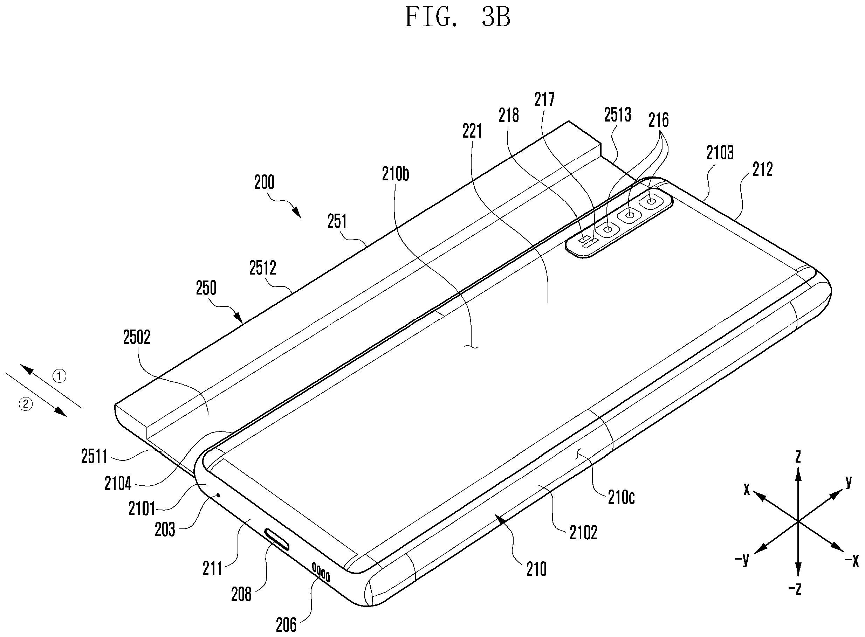

FIGS. 2a and 2b are front surface perspective views of an electronic device illustrating a slide-in state and a slide-out state according to various embodiments of the present disclosure. FIGS. 3a and 3b are rear surface perspective views of an electronic device illustrating a slide-in state and a slide-out state according to various embodiments of the present disclosure.

The electronic device 200 of FIGS. 2a to 3b may be at least partially similar to the electronic device 101 of FIG. 1 or may include other embodiments of the electronic device.

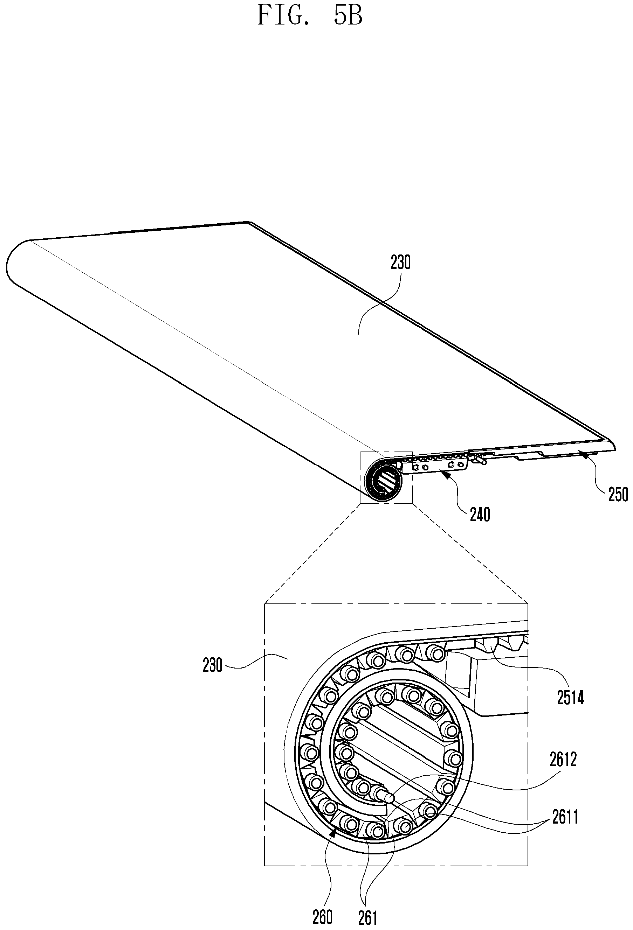

With reference to FIGS. 2a to 3b, the electronic device 200 includes a housing 210 (e.g., a housing structure, a first housing, a base bracket, or a base housing); a slide structure 250 (e.g., a slide structure, a second housing, a slide bracket, or a slide housing) coupled to be movable at a designated direction from the housing 210 (e.g.,X-axis direction) and at a designated reciprocating distance; a bendable member or a bendable support member (e.g., the bendable member 260 of FIG. 5b)(e.g., a hinge rail or articulated hinge module) coupled to one end of the slide structure 250 and accommodated in the inner space of the housing 210 through bending in a slide-in state; and a flexible display 230 (e.g., an expandable display) disposed to receive support of the slide structure 250 and the bendable member (e.g., the bendable member 260 of FIG. 5b). According to an embodiment, at least a portion of the flexible display 230 may be disposed to be invisible from the outside by being accommodated in the inner space of the housing 210 while being supported by the bendable member (e.g., the bendable member 260 of FIG. 5b) in a state in which at least a portion of the flexible display 230 is slid in a designated direction (direction ②). According to an embodiment, the flexible display 230 may be disposed to be at least partially visible from the outside while being supported by the bendable member (e.g., the bendable member 260 of FIG. 5b) forming the same plane as the slide structure 250 in a slide-out state in a designated direction (direction ①).

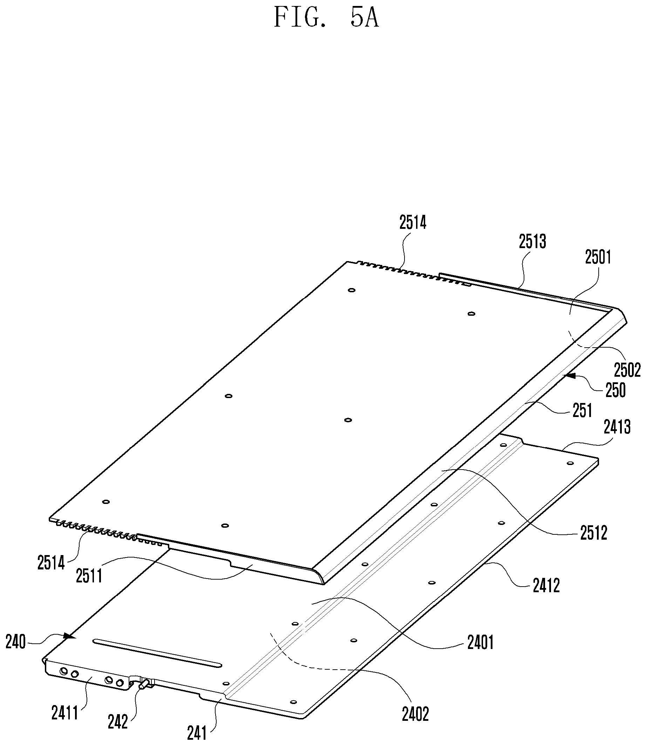

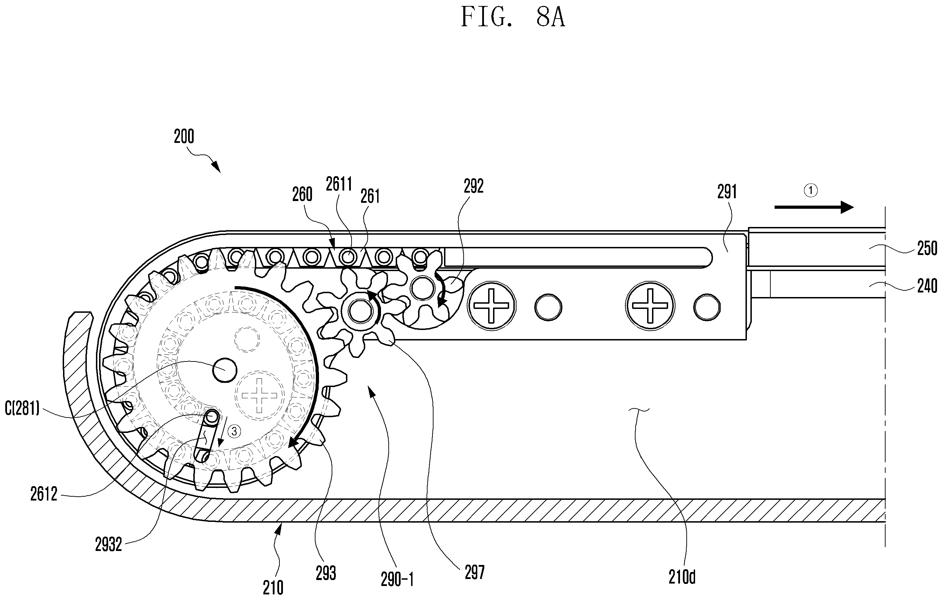

According to various embodiments, the electronic device 200 may include a front surface 210a (e.g., the first surface) facing a first direction (e.g., a Z-axis direction), a rear surface 210b (e.g., the second surface) facing a second direction (e.g., -Z-axis direction) opposite to the first direction, and a housing 210 (e.g., the housing structure) including a side surface 210c surrounding the space between the front surface 210a and the rear surface 210b (e.g., the space 210d in FIG. 8a) and at least partially exposed to the outside. According to an embodiment, the rear surface 210b may include a rear surface cover 221 configured as at least a part of the housing 210. In some embodiments, the housing 210 may be disposed in the inner space of the electronic device 200 and may be configured through a base bracket (e.g., the base bracket 240 of FIG. 5a) guiding the slide structure 250, at least one side surface cover 211 and 212 coupled to at least a portion of the base bracket (e.g., the base bracket 240 of FIG. 5a), and at least a portion of the rear surface cover 221. According to an embodiment, the rear surface cover 221 may be formed of a polymer, coated or tinted glass, ceramic, metal (e.g., aluminum, stainless steel (STS), or magnesium), or a combination of at least two of the foregoing. In some embodiments, the rear surface cover 221 may be extended to at least a portion of the side surface 210c. In some embodiments, both edges of the front surface 210a and/or the rear surface 210b may be formed in a curved surface and may be seamlessly connected to the side surface 210c having a curved surface.

According to various embodiments, the side surface 210c may include a first side surface 2101 having a first length; a second side surface 2102 extending from the first side surface 2101 to have a second length longer than the first length in a direction perpendicular to the first side surface 2101; a third side surface 2103 extending parallel to the first side surface 2101 from the second side surface 2102 and having a first length; and a fourth side surface 2104 extending parallel to the second side surface 2102 from the third side surface 2103 and having a second length. According to an embodiment, the slide structure 250 may support the flexible display 230 and may expand the display area of the flexible display 230 by being slid out from the second side surface 2102 to the fourth side surface 2104 direction (direction①) (e.g., X-axis direction), or reduce the display area of the flexible display 230 by being slid in from the fourth side surface 2104 to the second side surface 2102 direction (direction②) (e.g., -X-axis direction).According to an embodiment, at least one of the side surface covers 211 and 212 may be disposed on the first side surface 2101 and the third side surface 2103.

According to various embodiments, the slide structure 250 may include a lateral member 251 disposed at a position that at least partially supports the flexible display 230 and is at least partially visible from the outside in a slide-in state and/or a slide-out state. According to an embodiment, the lateral member 251 may include a fifth side surface 2511 that is slidably coupled to the first side surface 2101; a sixth side surface 2512 that extends from the fifth side surface 2511 and at least partially faces the fourth side surface 2104 in a slide-in state; and a seventh side surface 2513 that extends from the sixth side surface 2512 and is slidably coupled to the third side surface 2103.According to an embodiment, the fifth side surface 2511 and the seventh side surface 2513 may be disposed to be invisible from the outside by being slid into the inner space of the housing 210 in a slide-in state. In some embodiments, the fifth side surface 2511 and the seventh side surface 2513 may be disposed so that at least a portion of them may be visible from the outside by being partially slid into the inner space of the housing 210 in a slide-in state.

According to various embodiments, the flexible display 230 may include a first portion 230a (e.g., a planar portion) supported by the slide structure 250 and a second portion 230b (e.g., a bendable portion) that extends from the first portion 230a and is supported by a bendable member 260 (e.g., the bendable member 260 of FIG. 5b). According to an embodiment, the second portion 230b of the flexible display 230 may be disposed to be slid into the inner space of the housing 210 and not to be exposed to the outside in the slide-in state of the electronic device 200, and it may be exposed to the outside to extend from the first portion 230a while being supported by a bendable member (e.g., the bendable member 260 of FIG. 5b) in the slide-out state of the electronic device 200. Therefore, the electronic device 200 may include a rollable type and/or a slidable type electronic device in which the display area of the flexible display 230 may vary according to the movement of the slide structure 250 from the housing 210.

According to various embodiments, the slide structure 250 may be coupled in a sliding manner to be at least partially slid in or slid out of the housing 210. For example, the electronic device 200 may be configured to have a first width W1 from the second side surface 2102 to the fourth side surface 2104 in the slide-in state. According to an embodiment, the electronic device 200, in a slide-out state, may be configured to have a third width W3 greater than the first width W1 by a bendable member (e.g., the bendable member 260 of FIG. 5b) slid into the housing 210 being moved in a designated direction (e.g., the X-axis direction) to have the additional second width W2. Accordingly, the flexible display 230 may have a first display area substantially corresponding to the first width W1 in the slide-in state, and it may have a second display area that substantially corresponds to the third width W3 and is larger than the first display area in the slide-out state.

According to various embodiments, the slide structure 250 may be operated through a user's manipulation. For example, the electronic device 200 may be transitioned into a slide-in state or a slide-out state through a user's manipulation of pressing the outer surface of the flexible display 230 in a designated direction. In some embodiments, the electronic device 200 may slide out automatically the slide structure 250 in a designated direction (e.g., the X-axis direction) through manipulating a button (not shown) of a locker (not shown) exposed to the outside. In this case, the slide structure 250 may be controlled to keep the slide-in status through a locker (not shown ) while retaining a restoring force for sliding out by an elastic member (e.g., torsion spring) when pressed in a designated direction (e.g., - X-axis direction). In some embodiments, the slide structure 250 may be automatically operated through a driving mechanism (e.g., a driving motor, a deceleration module, and/or a gear assembly) disposed in the inner space of the housing 210. According to an embodiment, the electronic device 200 may be configured to control the operation of the slide structure 250 through a driving mechanism in the case that the electronic device 200 detects an event for a transition of the slide-in/out state of the electronic device 200 through a processor (e.g., the processor 120 of FIG. 1). In some embodiments, a processor (e.g., the processor 120 of FIG. 1) of the electronic device 200 may control the flexible display 230 to display an object and an executed application program in a variety of ways in response to the changed display area of the flexible display 230 according to a slide-in or a slide-out state. In some embodiments, the electronic device 200 may control the flexible display 230 via a processor (e.g., processor 120 of FIG. 1) to display the application program in response to the changed display area of the flexible display 230 during an intermediate state (e.g., the free stop state) in which the transitioning from the slide-in state to the slide-out state stopped and/or during the transition operation.

According to various embodiments, the electronic device 200 may include at least one of an input device 203, sound output devices 206 and 207, sensor modules 204 and 217, camera modules 205 and 216,a connector port 208, a key input device (not shown), or an indicator (not shown). In another embodiment, the electronic device 200 may be configured so that at least one of the above-described components is omitted or other components are additionally included.

According to various embodiments, the input device 203 may include a microphone. In some embodiments, the input device 203 may include a plurality of microphones disposed to detect the direction of sound. The sound output devices 206 and 207 may include speakers. The sound output devices 206 and 207 may include an external speaker 206 and a receiver 207 for a call. In another embodiment, the sound output devices 206 and 207 may include a speaker (e.g., a piezo speaker) operating while excluding a separate speaker hole.

According to various embodiments, the sensor modules 204 and 217 may generate electrical signals or data values corresponding to an internal operating state of the electronic device 200 or an external environmental state. The sensor modules 204 and 217 may include, for example, the first sensor module 204 (e.g., a proximity sensor or an illuminance sensor) disposed on the front surface 210a of the electronic device 200 and/or the second sensor module 217 (e.g., a hear rate monitoring (HRM) sensor) disposed on the rear surface 210b of the electronic device 200. According to an embodiment, the first sensor module 204 may be disposed below the flexible display 230 on the front surface 210a of the electronic device 200. According to an embodiment, the first sensor module 204 may include at least one of a proximity sensor, an illuminance sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a bio sensor, a temperature sensor, or a humidity sensor.

According to various embodiments, the camera modules 205 and 216 may include a first camera module 205 disposed on the front surface 210a and a second camera module 216 disposed on the rear surface 210b of the electronic device 200. According to an embodiment, the electronic device 200 may include a flash 218 located near the second camera module 216. According to an embodiment, the camera modules 205 and 216 may include one or a plurality of lenses, an image sensor, and/or an image signal processor. According to an embodiment, the first camera module 205 may be disposed under the flexible display 230 and photograph a subject through a part of an active area of the flexible display 230. According to an embodiment, flash 218 may include, for example, a light emitting diode or a xenon lamp.

According to various embodiments, some type of camera module 205 of the camera modules 205 and 216, some type of sensor module 204 of the sensor modules 204 and 217, or an indicator may bedisposed to be exposed through the flexible display 230. For example, some type of camera module 205, some type of the sensor module 204, or an indicator may be disposed in an inner space of the electronic device 200 to be in contact with the external environment through a perforated opening or a transmission area in the flexible display 230. According to an embodiment, a portion of the flexible display 230 facing the camera module 205 may be formed as a transmissive area having a designated transmittance as a part of an area displaying content. According to an embodiment, the transmissive area may be formed to have a transmittance in a range of about 5% to about 20%. Such a transmissive area may include an area overlapping with an effective area (e.g., an angle of view area) of some type of camera module 205 through which light for forming an image formed by an image sensor passes. For example, the transmissive area of the flexible display 230 may include an area in which pixel density and/or wiring density are lower than those of the surrounding area. For example, a transmissive area may replace the aforementioned opening. For example, some camera modules 205 may include an under display camera (UDC). In another embodiment, some of the sensor modules 204 may be disposed to perform their functions without being visually exposed through the flexible display 230 in the inner space of the electronic device 200.

According to various embodiments, the electronic device 200 may include at least one antenna (e.g., the antenna module 197 of FIG. 1). According to an embodiment, at least one antenna (e.g., the antenna module 197 of FIG. 1) may be, for example, configured to transmit and receive a signal for wirelessly communicating with an external electronic device (e.g., the electronic device 104 of FIG. 1). According to an embodiment, the electronic device 200 may include another antenna (not shown) disposed in an inner space. According to an embodiment, another antenna may wirelessly transmit and receive power required for charging. According to an embodiment, at least one antenna and/or another antenna may include a legacy antenna, mmWave antenna, near field communication (NFC) antenna, wireless charging antenna, and/or magnetic secure transmission (MST) antenna.

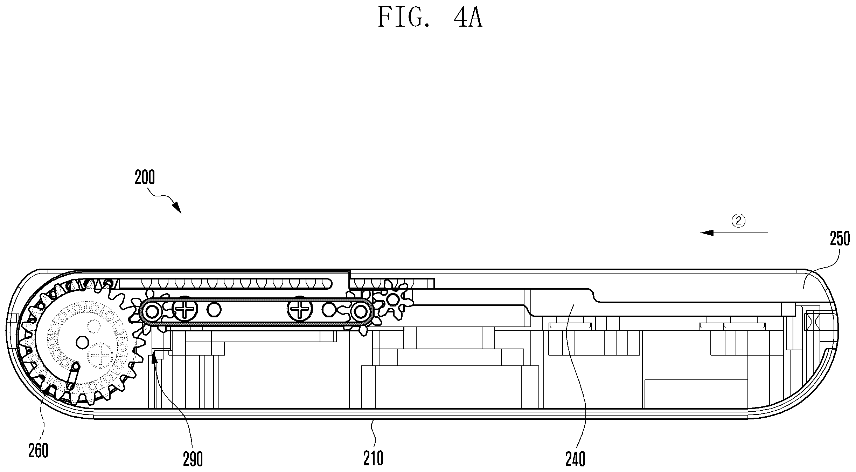

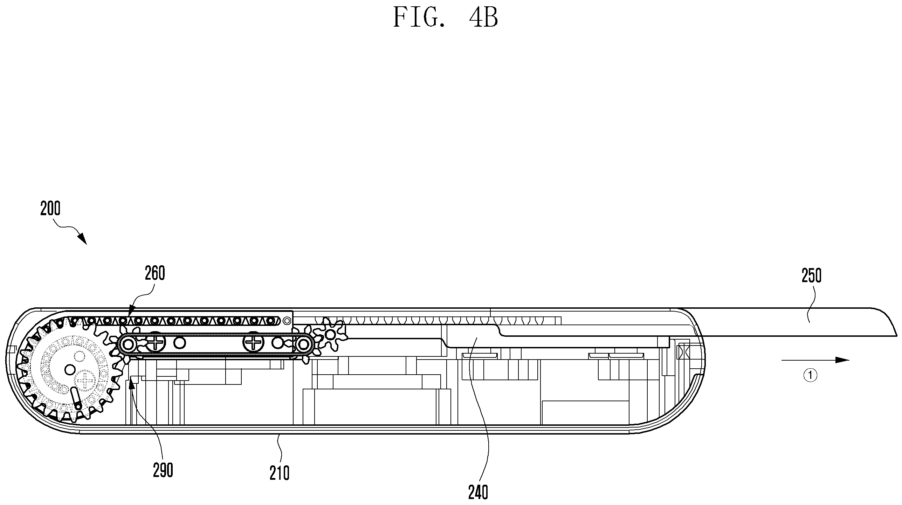

FIGS. 4a and 4b are schematic configuration diagrams of an electronic device illu strating a slide-in state and a slide-out state through a rolling guide structure accor ding to various embodiments of the present disclosure.

FIG. 4a is a partial cross-sectional view of the electronic device 200 viewed along line 4a-4a of FIG. 2a, and FIG. 4b is a partial cross-sectional view of the electronic device 200 viewed along line 4b-4b of FIG. 2b.

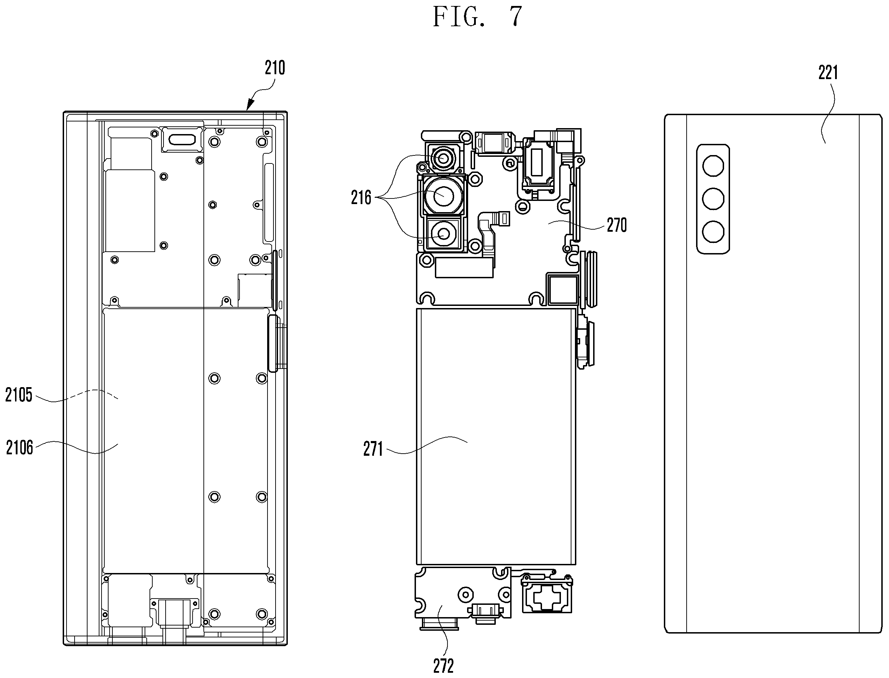

With reference to FIGS. 4a and 4b, the electronic device 200 includes a housing 210; a slide structure 250 slidably disposed at a designated reciprocating distance from the housing 210; a bendable member 260 connected to the slide structure 250; a flexible display (e.g., the flexible display 230 of FIG. 2a) disposed to receive support of the bendable member 260 and the slide structure 250; and a rolling guide structure guiding a flexible display (e.g., the flexible display 230 of FIG. 2a) accommodated in the inner space (e.g., the space 210d of FIG. 7a) of the housing 210 in a rolling manner according to the movement of the bendable member 260 and/or the slide structure 250. The bendable member 260 is at least partially accommodated in the inner space of the housing 210 in a state slid in in a designated direction (direction ②) by being coupled to interlock with the slide structure 250, and it may be at least partially slid out from the inner space of the housing 210 to form substantially the same plane as the slide structure 250 in a state slid out ina designated direction (direction ①). Accordingly, a portion (e.g., the second portion 230b of FIG. 2b) supported by the bendable member 260 of the flexible display (e.g., the flexible display 230 of FIG. 2a) may be disposed to be invisible from the outside in a slide-in state by being accommodated in the inner space of the housing 210 (e.g., the space 210d of FIG. 7a) together with the bendable member 260.

The electronic device 200 includes a rolling guide structure 290 to help secure an efficient mounting space for other electronic components by being disposed in the inner space of the housing 210 and accommodating a portion of the flexible display (e.g., the flexible display 230 of FIG. 2a) in a rolling manner in a slide-in state. According to an embodiment, the rolling guide structure 290 may help perform a smooth rolling operation by regulating the force for unfolding during the rolling operation of the flexible display (e.g., the flexible display 230 of FIG. 2a).

Hereinafter, a rolling guide structure 290 for a flexible display (e.g., the flexible display 230 of FIG. 2a) will be described in detail.

FIGS. 5a and 5b are perspective views illustrating a coupling process of a rolling guide structure according to various embodiments of the present disclosure.

In the description of the sequential coupling process of the rolling guide structure 290 disposed on the electronic device 200 of FIG. 5a to FIG. 5g, the same reference numerals are assigned to the same components in each drawing, and duplicate descriptions may be omitted.

Components of the rolling guide structure 290 according to exemplary embodiments of the present disclosure may be substantially formed of a metal material, but they are not limited thereto. For example, the components of the rolling guide structure 290 may be formed of a polymer or by double-injecting a metal and a polymer.

With reference to FIG. 5a, an electronic device (e.g., the electronic device 200 of FIG. 2a) may include a base bracket 240 disposed in an inner space of a slide structure 250 and a housing (e.g., the housing 210 of FIG. 2a) and coupled with at least a portion of the slide structure 250. According to an embodiment, the slide structure 250 may be disposed to have a coupling structure capable of sliding with the base bracket 240. In some embodiments, the slide structure 250 may be disposed to have a coupling structure capable of sliding through the side surface covers (e.g., the side surface covers 211 and 212 of FIG. 2a) of the electronic device 200.

According to various embodiments, the slide structure 250 may include a first surface 2501, a second surface 2502 facing in the opposite direction to the first surface 2501, and a first lateral member 251 (e.g., the lateral member 251 of FIG. 2a) surrounding the space between a first surface 2501 and a second surface 2502. According to an embodiment, the first surface 2501 may be formed as a flat surface capable of supporting a portion (e.g., the first portion 230a of FIG. 2b) of a flexible display (e.g., the flexible display 230 of FIG. 2a). According to an embodiment, the first lateral member 251 may include a fifth side surface 2511, a sixth side surface 2512 extending from the fifth side surface 2511, and a seventh side surface 2513 extending from the sixth side surface 2512.

According to various embodiments, the base bracket 240 may have a third surface 2401 facing the second surface 2502 of the slide structure 250, a fourth surface 2402 facing the opposite direction to the third surface 2401, and a second lateral member 241 surrounding a space between the third and fourth surfaces 2401 and 2402. According to an embodiment, the second lateral member 241 may include an eighth side surface 2411 disposed side by side with the fifth side surface 2511, a ninth side surface 2412 disposed side by side with the sixth side surface 2512, and a tenth side surface 2413 disposed side by side with the seventh side surface 2513.

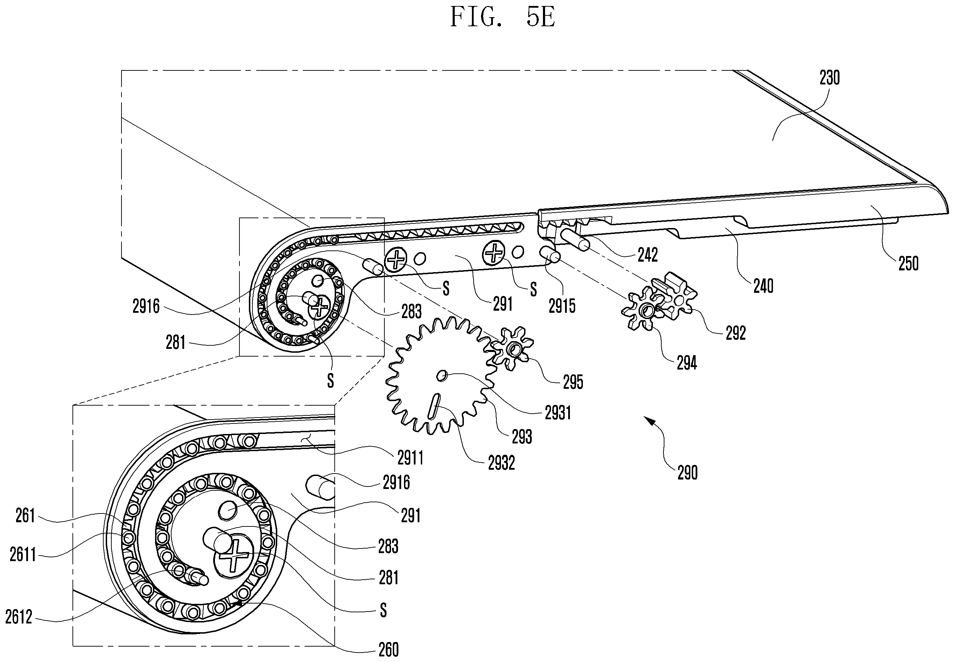

According to various embodiments, the rolling guide structure (e.g., the rolling guide structure 290 of FIG. 4a) to be described later may be disposed through a fifth side surface 2511 of the slide structure 250 and an eighth side surface 2411 of the base bracket 240. In some embodiments, the rolling guide structure (e.g., the rolling guide structure 290 of FIG. 4a) may be additionally disposed using the seventh side surface 2513 of the slide structure 250 and the tenth side surface 2413 of the base bracket 240. According to an embodiment, the base bracket 240 may include a first shaft 242 that protrudes outward from the eighth side surface 2411 and can rotatably accommodate a first gear (e.g., the first gear 292 of FIG. 5e) to be described later. According to an embodiment, the first shaft 242 may also be disposed on the tenth side surface 2413 opposite to the eighth side surface 2411 of the base bracket 240. According to an embodiment, the slide structure 250 may include a gear structure that is disposed on at least a portion of the fifth side surface 2511 and can mesh with the first gear (e.g., the first gear 292 of FIG. 5e). For example, in the case that the first gear (e.g., the first gear 292 of FIG. 5e) includes a pinion gear, the gear structure may include a rack gear 2514. According to an embodiment, the rack gear 2514 for meshing with the first gear (e.g., the first gear 292 of FIG. 5e) may be disposed in the seventh side surface 2513 opposite to the fifth side surface 2511 of the slide structure 250.

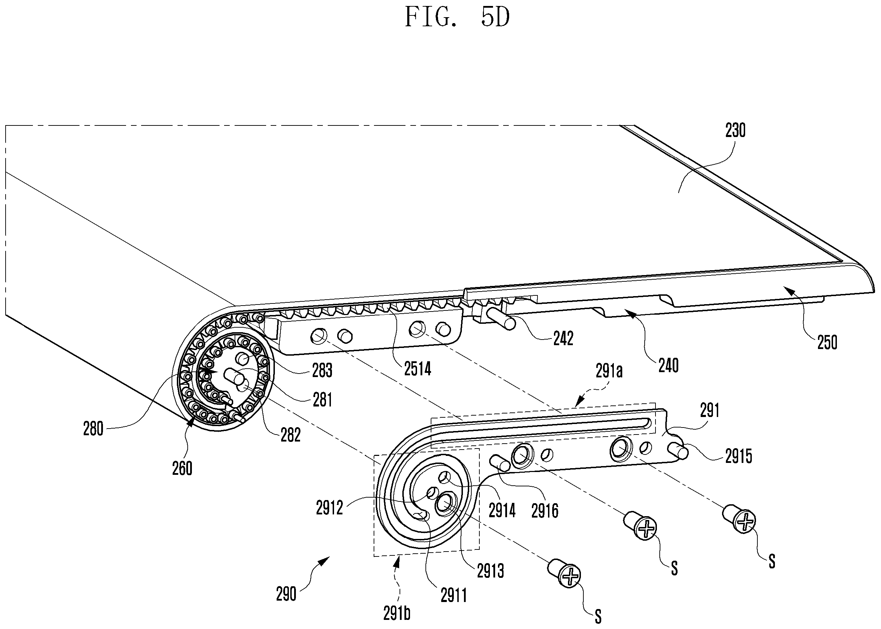

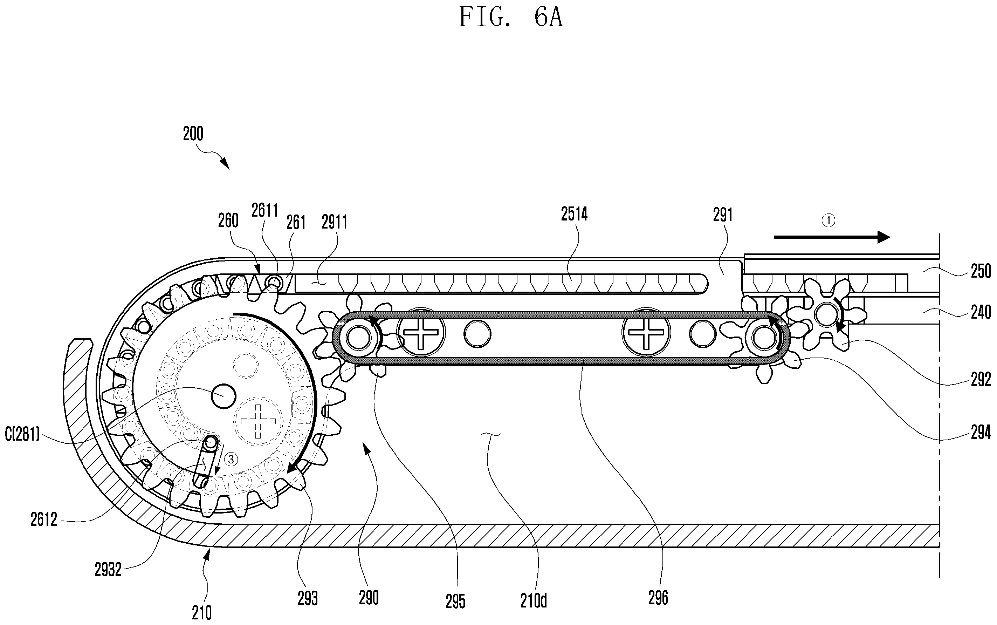

With reference to FIG. 5b, an electronic device (e.g., the electronic device 200 of FIG. 2a) includes a bendable member 260 connected to interlock with the slide structure 250. The bendable member 260 and the slide structure 250 support the flexible display 230 by forming substantially the same plane in a slide-in state. According to an embodiment, the bendable member 260 may support a portion of the flexible display 230 to be rolled by being deformed in a rolling type in a slide-in state. According to an embodiment, the bendable member 260 may include a plurality of multi-bars 261 rotatably connected to each other. According to an embodiment, the plurality of multi-bars 261 may be movably connected so that distances with respect to each other are adjusted. For example, in the case that the plurality of multi-bars 261 are rolled in a rolling manner into the inner space of the housing 210 through a rolling guide structure (e.g., the rolling guide structure 290 of FIG. 4a), the intervals may be gradually reduced corresponding to the curvature that increases toward the center. According to an embodiment, the bendable member 260 may include guide protrusions 2611 protruding from opposite side surfaces of each of the plurality of multi-bars 261. According to an embodiment, the guide protrusion 2611 may be formed with the amount of protrusion to be guided riding on a guide hole (e.g., a guide hole 2911 of FIG. 5d) formed in a spiral manner in a guide bracket (e.g., the guide bracket 291 of FIG. 5d) to be described later. According to an embodiment, the bendable member 260, in a rolled state, may include a hooking protrusion 2612 protruding at both ends of the multi-bar 261 disposed closest to the center (e.g.,the center C of the second gear 293 in FIG. 6a). According to an embodiment, the hooking protrusion 2612 may be formed with a protruding amount that can be hooked in a hooking hole (e.g.,hooking hole 2932 of FIG. 5e) having a length formed in a second gear (e.g., the second gear 293 of FIG. 5e) to be described later. For example, the protrusion of the hooking protrusion 2612 may be greater than that of the guide protrusion 2611.

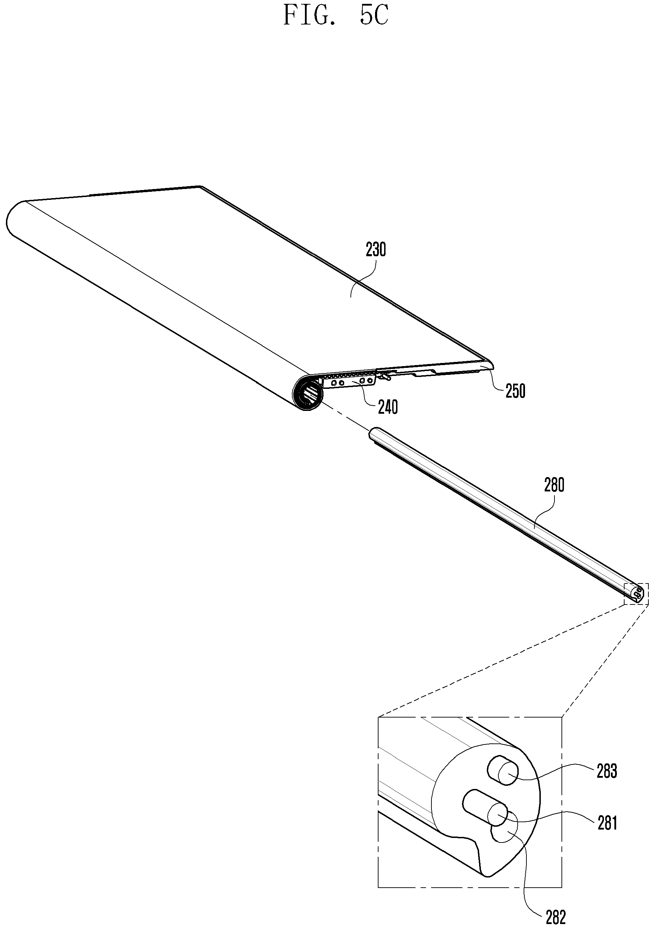

With reference to FIG. 5c, an electronic device (e.g., the electronic device 200 of FIG. 2a) may include a support member 280 supporting the bendable member 260 to be rolled. According to an embodiment, the support member 280 may have a shaft structure having a length formed by a curved outer surface in order to reduce frictional resistance while supporting the plurality of multi-bars 261 of the bendable member 260 to be moved. According to an embodiment, the outer surface of the support member 280 may include a coating layer (e.g., Teflon coating layer or a hard coating layer) to reduce frictional resistance. According to an embodiment, the support member 280 may be disposed in a manner passing through the rolled portion of the bendable member 260. According to an embodiment, the support member 280 may include a second shaft 281 that protrudes through an end (e.g., side part) and can rotatably receive a second gear (e.g., the second gear 293 in FIG. 2) to be described later. According to an embodiment, the support member 280 may be disposed near the second shaft 281 at the end, and it may include a screw fastening hole 282 for fixing a portion of a guide bracket (e.g., the guide bracket 291 of FIG. 5d) to be described later and a fixing protrusion 283 for preventing the guide bracket 291 from randomly moving during temporary assembly. According to an embodiment, the second shaft 281, the screw fastening hole 282, and the fixing protrusion 283 may be disposed in the same way opposite to the support member 280.

With reference to FIG. 5d, an electronic device (e.g., the electronic device 200 of FIG. 2a) may include a guide bracket 291 fixed to the base bracket 240. According to an embodiment, the guide bracket 291 may be fixed to the side surface of the base bracket 240 (e.g., the eighth side surface 2411 and/or the tenth side surface 2413 of FIG. 5a). According to an embodiment, the guide bracket 291 may include a guide hole 2911 for guiding the guide protrusions 2611 of the bendable member 260. According to an embodiment, the guide hole 2911 may include the first area 291a that is guiding the bendable member 260 to form the same plane as the side structure 250 and the second area that is connected to the first area 291a and is guiding the bendable member 260 in a rolling manner in an inner space of the housing (e.g., the housing 210 of FIG. 2a). According to an embodiment, the first area 291a and the second area 291b may be tangentially connected. According to an embodiment, the guide bracket 291 may protrude through the outer surface and include a third shaft 2915 and a fourth shaft 2916 that the first interlocking gear (e.g., the first interlocking gear 294 of FIG. 5e) and the second interlocking gear (e.g., the second interlocking gear 295 of FIG. 5e) to be described later can rotatably accommodate. According to an embodiment, the bendable member 260 may maintain an unfolded state by being guided to the first area 291a of the guide hole 2911 in a slide-out state. In some embodiments, at least a portion of the bendable member 260 may be located in the second area 291b in a slide-out state. According to an embodiment, the bendable member 260 may maintain a rolled state by being guided to the second area 291b of the guide hole 2911 in the slide-in state. In some embodiments, at least a portion of the bendable member 260 may be located in the first area 291a in a slide-in state.

According to various embodiments, a portion of the guide bracket 291 corresponding to the first area 291a may be fixed to the side surface of the base bracket 240 through a screw S, and a remaining portion of the guide bracket 291 corresponding to the second area 291b may be fixed to the side surface of the support member 280 through a screw S. For example, at least a portion of the guide bracket 291 may be disposed to face the side surface of the support member and may be fixed in the way that the screw S passing through the screw through hole 2912 is fastened to the screw fastening hole 282 of the support member 280. In this case, the second shaft 281 protruding from the support member 280 may be disposed to protrude out of the guide bracket 291 through a shaft through-hole 2912 formed in the guide bracket 291. According to an embodiment, it is possible to receive help in aligning the fixing position of the guide bracket 291 before fastening the screw S through the provisional assembly structure in which the fixing protrusion 283 of the support member 280 is fixed to the fixing hole 2914 formed in the guide bracket 291 and the second shaft 281 of the support member 280 penetrates through the shaft through-hole 2912 of the guide bracket 291. According to an embodiment, a gap between the second shaft 281 and the shaft through hole 2912 may be substantially equal to or greater than a gap between the fixing protrusion 283 and the fixing hole 2914.

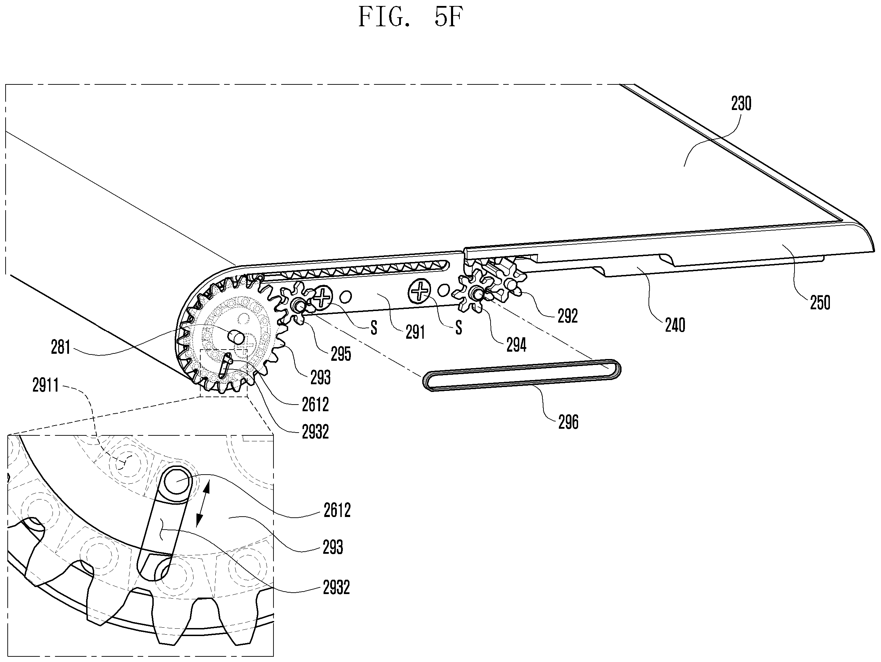

With reference to FIGS. 5e and 5f, an electronic device (e.g., the electronic device 200 of FIG. 2a) may include a first gear 292 rotatably coupled to the first shaft 242 protruding from the base bracket 240 as a part of the rolling guide structure 290 and at least one interlocking gear 294 or 295 rotatably coupled to the guide bracket 291. According to an embodiment, at least one of the interlocking gears 294 and 295 may include a first interlocking gear 294 and a second interlocking gear 295, each of which is rotatably coupled to the third shaft 2915 and the fourth shaft 2916 protruding at designated intervals on the outer surface of the guide bracket 291. According to an embodiment, the first interlocking gear 294 and the second interlocking gear 295 may be interlocked through a belt member 296 (e.g., a V-belt). In some embodiments, the first interlocking gear 294 and the second interlocking gear 295 may be rotatably connected through at least one third interlocking gear (not shown) that is disposed therebetween and meshed with respect to each other. According to an embodiment, the first gear 292 may be disposed to mesh with the rack gear 2514 of the slide structure 250. According to an embodiment, the first interlocking gear 294 may be disposed to mesh with the first gear 292, and the second interlocking gear 295 may be disposed to mesh with the second gear 293. Therefore, in the case that the slide structure 250 is moved, the first gear 292 may be rotated through the rack gear 2514, and the rotational force of the first gear 292 may be transmitted through the first interlocking gear 294, the belt member 296, and the second interlocking gear 295.

According to various embodiments, the electronic device (e.g., the electronic device 200 of FIG. 2a) may include a hooking structure for rolling the bendable member 290 through the second gear 293 that is rotated in a slide-in state or for transforming the bendable member 290 to have substantially the same plane as the slide structure 250. According to an embodiment, the hooking structure may include a hooking protrusion 2612 of the bendable member 260 protruding outward through the guide hold 2911 of the guide bracket 291 and a hooking hole 2932 formed in the second gear 293 so that the hooking protrusion 2612 can be hooked. According to an embodiment, the hooking hole 2932 may be formed to have a length in a radial direction from a rotating shaft (e.g., the second shaft 281) at a designated position of the second gear 293.

According to various embodiments, in the case that the slide structure 250 is moved in a sliding manner from the base bracket 240, the linear motion of the rack gear 2514 may be converted into rotational force through the first gear 292 and the rotational force of the first gear 292 may be transmitted to the second gear 293 through the first interlocking gear 294, the belt member 296, and the second interlocking gear 295. In this case, the hooking protrusion 2612 hooked in the hooking hole 2932 by the rotation of the second gear 293 is also moved along the spiral guide hole 2911, thereby inducing the movement of the bendable member 260. According to an embodiment, the hooking protrusion 2612 moved in a rolling manner may be moved in the longitudinal direction of the hooking hole 2932 in order to compensate for the varying distance with the rotating shaft (e.g., the second shaft 281) in the radial direction.

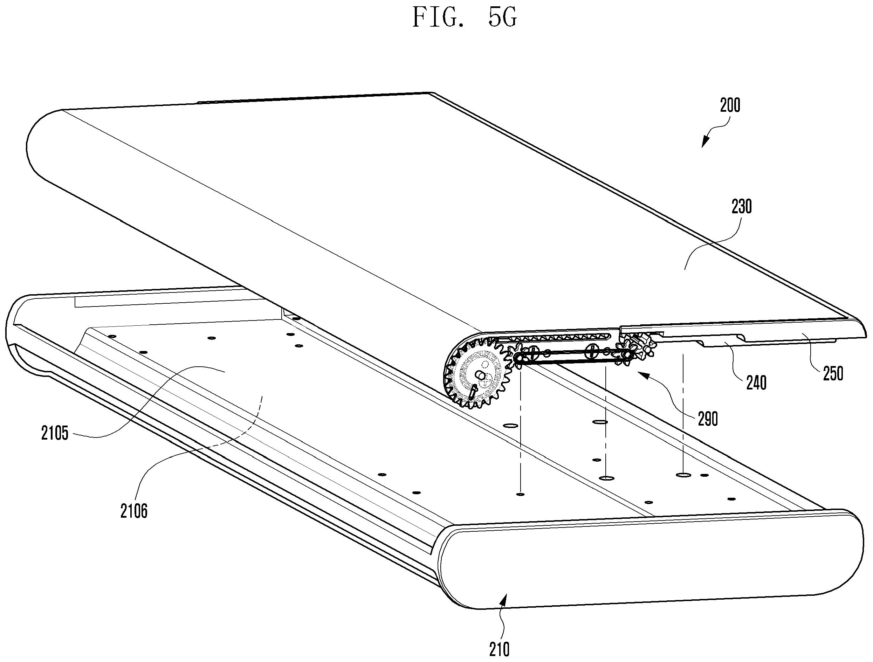

With reference to FIG. 5g, the electronic device 200 may include a housing 210 including a first mounting surface 2105 and a second mounting surface 2106 facing in the opposite direction to the first mounting surface 2105; a sliding structure 250 disposed to face the first mounting surface 2105 of the housing 210; a bendable member 260 coupled to interlock with the slide structure 250; a flexible display 230 disposed to receive support from the bendable member 260 and the slide structure 250; a base bracket 240 disposed between the slide structure 250 and the first mounting surface 2105; and a rolling guide structure 290 that is coupled through the base bracket 240 and the slide structure 250 and guides the bendable member 260 and the flexible display 230 in a rolling manner in the slide-in state. According to an embodiment, the slide structure 250 including the rolling guide structure 290 and the base bracket 240 may be disposed to be invisible from the outside with the manner (e.g., the screw fastening or structural bonding) by which the base bracket 240 is coupled to the first mounting surface 2105 of the housing 210.

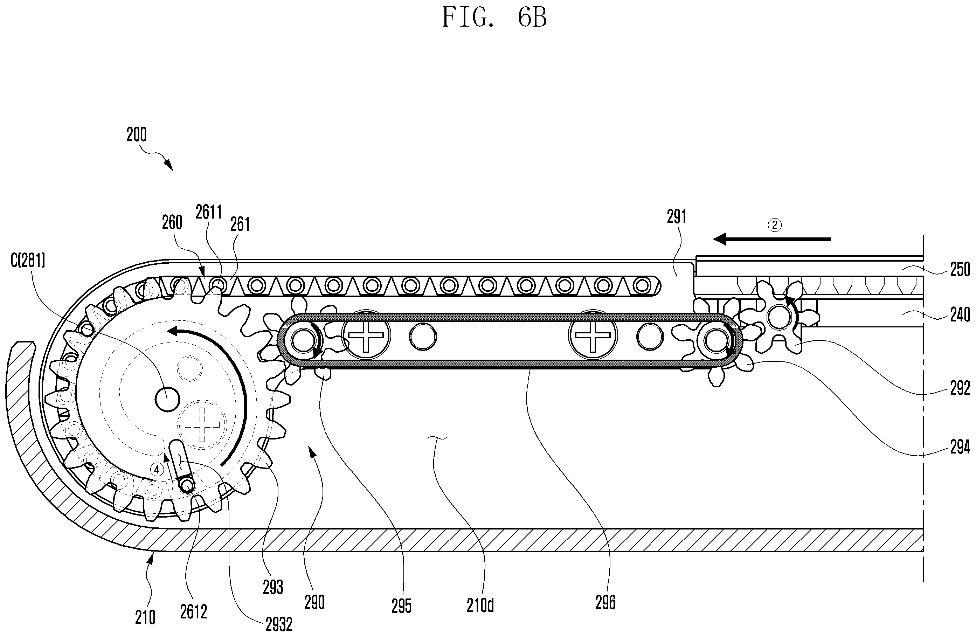

FIGS. 6a and 6b are operation diagrams illustrating a rolling operation of a flexible display through a rolling guide structure in a slide-in state and a slide-out state of an electronic device according to various embodiments of the present disclosure.

With reference to FIG. 6a, in the case that the electronic device 200 moves from the slide-in state to the slide-out state while moving in a designated direction (direction ①), the first gear 292 may be rotated clockwise through the rack gear 2514 of the slide structure 250. According to an embodiment, the first interlocking gear 294 receiving the rotational force of the first gear 292 and the second interlocking gear 295 connected to the first interlocking gear 294 through the belt member 296 may be rotated counterclockwise. According to an embodiment, the second gear 293 receiving the rotational force of the second interlocking gear 295 may be rotated again clockwise together with the hooking hole 2932. According to an embodiment, the hooking protrusion 2612 of the bendable member 260 hooked in the hooking hole 2932 may be rotated clockwise together with the bendable member 260, and the bendable member 260 may also be rotated clockwise through the hooking protrusion 2612 along the guide hole 2911 of the guide bracket 291. Therefore, at least a portion of the bendable member 260 and the flexible display 230, which remain rolled in the inner space 210d of the housing 210, may form substantially the same plane as the slide structure 250 and slide out from the inner space 210d of the housing 210. In this case, the hooking protrusion 2612 may be moved in a direction away from the second shaft 281, which is the center C of the second gear 293, along the radius (direction ③) in the hooking hole 2932.

With reference to FIG. 6b, in the case that the electronic device 200 moves from the slide-out state to the slide-in state while moving in a designated direction (direction ②), the first gear 292 may be rotated counterclockwise through the rack gear 2514 of the slide structure 250. According to an embodiment, the first interlocking gear 294 receiving the rotational force of the first gear 292 and the second interlocking gear 295 connected to the first interlocking gear 294 through the belt member 296 may be rotated clockwise. According to an embodiment, the second gear 293 receiving the rotational force of the second interlocking gear 295 may be rotated again counterclockwise together with the hooking hole 2932. According to an embodiment, the hooking protrusion 2612 of the bendable member 260 hooked in the hooking hole 2932 may be rotated counterclockwise together, and the bendable member 260 may also be rotated counterclockwise through the hooking protrusion 2612 along the guide hole 2911 of the guide bracket 291. Therefore, the bendable member 260 and the flexible display 230 exposed to the outside of the housing 210 may be accommodated in the inner space 210d of the housing 210 in a rolling manner through the guide protrusions 2611 of the bendable member 260 that are guided along the guide hole 2911 of the guide bracket 291. In this case, the hooking protrusion 2612 may be moved in a direction (direction ④) from the second shaft 281, which is the center C of the second gear 293, along the radius in the hooking hole 2932.

FIG. 7 is a diagram illustrating electronic components disposed between a housing and a rear surface cover according to various embodiments of the present disclosure.

With reference to FIG. 7, the electronic device 200 may include a housing 210 including a first mounting surface 2105 and a second mounting surface 2106 facing in the opposite direction to the first mounting surface 2105, a rear surface cover 221 disposed in the second mounting surface 2106, and at least one electrical structure disposed between the second mounting surface 2106 and the rear surface cover 221. According to an embodiment, at least one electrical structure may include at least one substrate 270 and 272, at least one camera module 216, and a battery 271 disposed near at least one substrate 270 and 272. According to an embodiment, the battery 271 may be disposed not to overlap with at least one of the substrates 270 and 272. In some embodiments, at least a portion of the battery 271 may be overlapped with at least one of the substrates 270 and 272. Although not shown, at least one electrical structure may further include a socket device disposed on the substrates 270 and 272, an interface connector port, at least one sensor module, an antenna module, or a key button module. In some embodiments, at least one electrical structure may be disposed to detect an external environment through the rear surface cover 221.

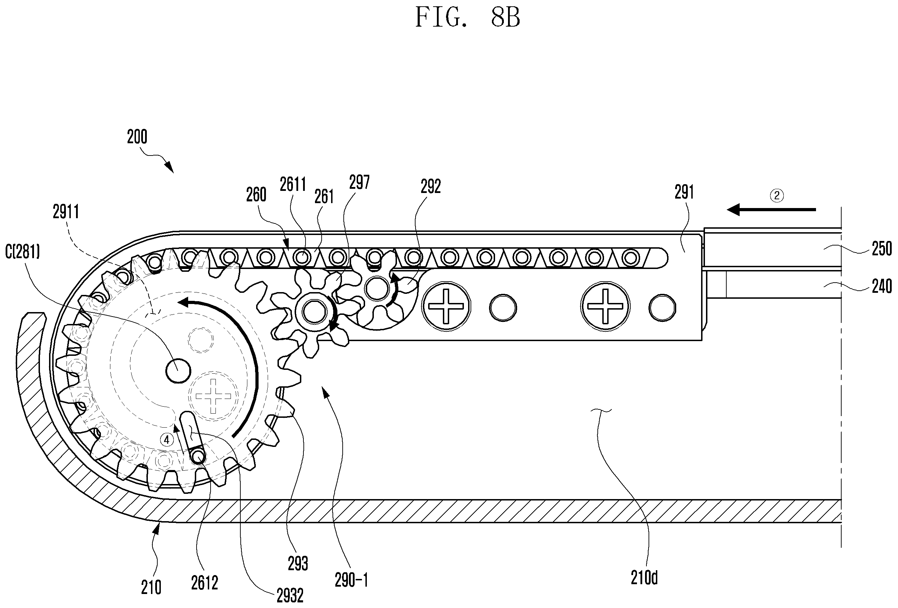

FIGS. 8a and 8b are operation diagrams illustrating a rolling operation of a flexible display through a rolling guide structure in a slide-in state and a slide-out state of an electronic device according to various embodiments of the present disclosure.

In the description of the electronic device 200 of FIGS. 8a and 8b, the same reference numerals are assigned to components substantially the same as those of the electronic device 200 of FIGS. 6a and 6b, and detailed descriptions thereof may be omitted.

With reference to FIG. 8a, the rolling guide structure 290-1 may be configured to transmit the rotational force of the first gear 292 to the second gear 293 through only one interlocking gear 297 without a belt member. In this case, the interlocking gear 297 may be rotatably disposed on the guide bracket 291 in a manner meshed with the first gear 292. According to an embodiment, the first gear 292 rotatably disposed on the base bracket 240 may be disposed in a position that can mesh with the guide protrusions 2611 disposed in each of the plurality of multi-bars 261 of the bendable member 260. For example, in the case that the bendable member 260 is moved, the first gear 262 meshed with the guide protrusions 2611 may be rotated in a designated direction.

According to various embodiments, in the case that the electronic device 200 transitions from a slide-in state to a slide-out state while moving in a designated direction (direction ①), the first gear 292 may be rotated clockwise through guide protrusions 2611 protruding from a plurality of multi-bars 261 of the bendable member 260.According to an embodiment, the interlocking gear 297 receiving the rotational force of the first gear 292 may be rotated counterclockwise. According to an embodiment, the second gear 293 receiving the rotational force of the interlocking gear 297 may be rotated again clockwise together with the hooking hole 2932. According to an embodiment, the hooking protrusion 2612 of the bendable member 260 hooked in the hooking hole 2932 may be rotated clockwise together with the bendable member 260, and the bendable member 260 may also be rotated clockwise through the hooking protrusion 2612 along the guide hole 2911 of the guide bracket 291. Therefore, the bendable member 260 and the flexible display 230, which remain rolled in the inner space 210d of the housing 210, may be slid out to be visible from the outside while forming substantially the same plane as the slide structure 250.

With reference to FIG. 8b, in the case that the electronic device 200 moves from the slide-out state to the slide-in state while moving in a designated direction (direction ②), the first gear 292 may be rotated counterclockwise through a plurality of guide protrusions 2611 of the bendable member 260. According to an embodiment, the interlocking gear 297 receiving the rotational force of the first gear 292 may be rotated clockwise. According to an embodiment, the second gear 293 receiving the rotational force of the interlocking gear 297 may be rotated counterclockwise together with the hooking hole 2932. According to an embodiment, the hooking protrusion 2612 of the bendable member 260 hooked in the hooking hole 2932 may be rotated in a counterclockwise direction together, and the bendable member 260 may also be rotated counterclockwise through the hooking protrusion 2612 along the guide hole 2911 of the guide bracket 291. Therefore, the bendable member 260 and the flexible display 230 exposed to the outside of the housing 210 may be accommodated in the inner space 210d of the housing 210 in a rolling manner through the guide protrusions 2611 of the bendable member 260 that are guided along the guide hole 2911 of the guide bracket 291.

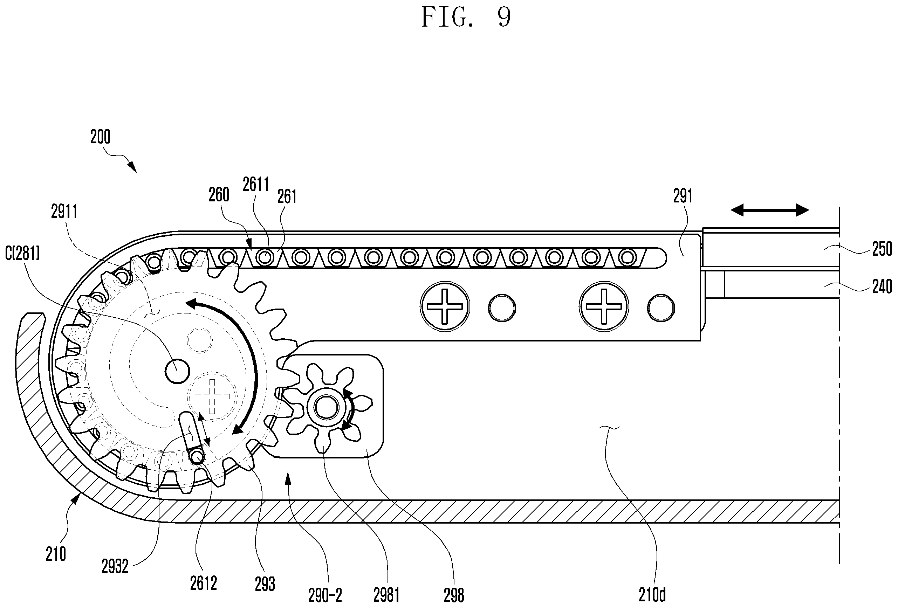

FIG. 9 is a partial cross-sectional view of an electronic device including a rolling guide structure according to various embodiments of the present disclosure.

In the description of the electronic device 200 of FIG. 9, the same reference numerals are assigned to components substantially the same as those of the electronic device 200 of FIGS. 6a and 6b, and detailed descriptions thereof may be omitted.

With reference to FIG. 9, the electronic device 200 may include a rolling guide structure 290-2 including a driving gear 2981 rotated by a driving motor 298 and meshed with a second gear 293 without a belt member and interlocking gears. In this case, the driving motor 298 including the driving gear 2981 may be disposed between the base bracket 240 and the rear surface cover (e.g., the rear surface cover 221 of FIG. 7) in the inner space 210d of the housing 210. According to an embodiment, the driving gear 2981 may include a pinion gear that meshes with the second gear 293. In some embodiments, a deceleration module may be further included between the driving motor 298 and the driving gear 3981 to reduce the rotational speed of the driving motor and increase the rotational force.

According to various embodiments, the second gear 293 receiving the rotational force of the driving gear 2981 through the driving motor 298 may be rotated in a designated direction (e.g., clockwise or counterclockwise) together with the hooking hole 2932. According to an embodiment, the hooking protrusion 2612 of the bendable member 260 hooked in the hooking hole 2932 may also be rotated in a specified direction (e.g., clockwise or counterclockwise), and the bendable member 260 may also be moved through the hooking protrusion 2612 along the guide hole 2911 of the guide bracket 291 in a designated direction. Therefore, the bendable member 260 and the flexible display 230, which remain rolled in the inner space 210d of the housing 210, may be slid out to be visible from the outside while forming substantially the same plane as the slide structure 250, or they may be slid in in the inner space 210d of the housing 210 in a rolling manner through the guide protrusions 2611 of the bendable member 260 that is guided along the guide hole 2911 of the guide bracket 291.

An electronic device (e.g., the electronic device 200 of FIG. 2a) includes a housing (e.g., the housing 210 of FIG. 2a); a slide structure (e.g., the slide structure 250 of FIG. 5a) slidably coupled along a first direction; a bendable member (e.g., the bendable member 260 of FIG. 5b) connected to the slide structure and accommodated in an inner space of the housing in a slide-in state; a flexible display disposed to be supported by the slide structure and the bendable member; and a rolling guide structure (e.g., the rolling guide structure 290 of FIG. 4a) disposed to face opposite side surfaces of the bendable member to accommodate a flexible display (e.g., the flexible display 230 of FIG. 5b) and at least a portion of the flexible display in a rolling manner, wherein the rolling guide structure includes a guide bracket (e.g., the guide bracket 291 of FIG. 5d) disposed in the inner space and including a spiral-shaped guide hole(e.g., the guide hole 2911 of FIG. 5d); a first gear (e.g., the first gear 292 of FIG. 5e) rotatably disposed according to the movement of the slide structure in the inner space; at least one interlocking gear (e.g., the interlocking gears 294 and 295 of FIG. 5e) rotatably disposed to receive rotational force transferred from the first gear; a second gear (e.g., the second gear of FIG. 5e) rotatably disposed to receive rotational force from the at least one interlocking gear; a hooking hole (e.g., the hooking hole 2932 of FIG. 5e) formed to have a length in a radial direction from the center at a designated position of the second gear as a hooking structure for moving the bendable member through rotation of the second gear; and a hooking structure including a hooking protrusion(e.g., the hooking protrusion 2612 of FIG. 5e) protruding from at least a portion of the bendable member and disposed to be hooked in the hooking hole, wherein the hooking protrusion is movable along the hooking hole by rotation of the second gear.

According to various embodiments, the bendable member may include a plurality of multi-bars disposed to be rotatable with respect to each other and guide protrusions protruding from side surfaces of each of the plurality of multi-bars, and the bendable member may be rolled while the guide protrusions are moving along the spiral-shaped guide hole.

According to various embodiments, the first gear may be disposed to mesh with the guide protrusions and rotate through movement of the guide protrusions.

According to various embodiments, at least one interlocking gear may be disposed to mesh with the first gear and the second gear.

According to various embodiments, the electronic device may include a base bracket that is disposed in the inner space of the housing and to which the slide structure is slidably coupled, wherein at least a portion of the guide bracket is fixed to a side surface of the base bracket.

According to various embodiments, the first gear may be rotatably disposed on a first support shaft protruding from a side surface of the base bracket.

According to various embodiments, the electronic device may include, in the inner space, a support member disposed along a second direction perpendicular to the first direction to support the rolled bendable member, wherein the support member is fixed through each of the guide brackets disposed on both side surfaces of the bendable member.

According to various embodiments, the electronic device may include a second support shaft protruding from the side surface of the support member to penetrate through the guide bracket, wherein the second gear is rotatably coupled to the second support shaft.

According to various embodiments, the electronic device may further include a third gear disposed on the slide structure and meshed with the first gear, wherein the first gear is rotated through the flow of the third gear by the movement of the slide structure.

According to various embodiments, the third gear may include a rack gear formed on a side surface of the slide structure, wherein the first gear includes a pinion gear meshed with the rack gear.

According to various embodiments, at least one interlocking gear may include a first interlocking gear disposed on the guide bracket and rotatably meshed with the first gear and a second interlocking gear disposed on the guide bracket, connected to the first interlocking gear through a power transmission member, and rotatably meshed with the second gear.

According to various embodiments, the power transmission member may include a V-belt connected to rotation shafts of the first gear and the second gear.

According to various embodiments, the bendable member may include a plurality of multi-bars disposed to be rotatable with respect to each other, and the hooking protrusion may protrude from both side surfaces of the multi-bars disposed closest to the center of the second gear among the plurality of multi-bars in a state in which the bendable member is rolled.

According to various embodiments, the hooking hole may be formed to have a straight length in a radial direction from the center of the first gear.

According to various embodiments, the length of the hooking hole may be determined according to a rolling amount of the bendable member.

According to various embodiments, an electronic device may include a housing; a bendable member accommodated in an inner space of the housing in a slide-in state; a flexible display disposed to be supported by the bendable member; and a rolling guide structure disposed to face both side surfaces of the bendable member to accommodate the bendable member and the flexible display in a rolling manner, wherein the rolling guide structure includes a guide bracket disposed in the inner space and having a spiral-shaped guide hole; a first gear rotatably disposed according to the movement of the bendable member in the inner space; at least an interlocking gear rotatably disposed to receive a rotational force from the first gear; a second gear rotatably disposed to receive a rotational force from at least one interlocking gear; a hooking hole formed to have a length in a radial direction from the center at a designated position of the second gear as a hooking structure for moving the bendable member through rotation of the second gear; and a hooking structure including a hooking protrusion protruding from at least a portion of the bendable member and disposed to be hooked in the hooking hole, wherein the hooking protrusion is movable along the hooking hole by rotation of the second gear.

According to various embodiments, the bendable member may include a plurality of multi-bars disposed to be rotatable with respect to each other and guide protrusions protruding from side surfaces of each of the plurality of multi-bars, and the bendable member may be rolled while the guide protrusions are moving along the spiral-shaped guide hole.

According to various embodiments, the first gear may be disposed to mesh with the guide protrusions and be rotated through movement of the guide protrusions.

According to various embodiments, at least one interlocking gear may be disposed to mesh with the first gear and the second gear.

According to various embodiments, the electronic device may include, in the inner space, the support member disposed to support the rolled bendable member and fixed through the guide bracket, and a second support shaft protruding from a side surface of the support member to penetrate through the guide bracket, wherein the second gear is rotatably coupled to the second support shaft.

## Claims

1. An electronic device comprising:
a housing (210);
a slide structure (250) slidably coupled to the housing (210) in a first direction;
a bendable member (260) connected to the slide structure (250) and accommodated in an inner space of the housing (210) in a slide-in state;
a flexible display (230) disposed to receive support of the slide structure (250) and the bendable member (260); and
a rolling guide structure (290) disposed to face opposite side surfaces of the bendable member (260) to accommodate at least a portion of the bendable member (260) and the flexible display (230) in a rolling manner, wherein
the rolling guide structure (290) includes :
a guide bracket (291) disposed in the inner space and including a spiral-shaped guide hole (2911),
**characterised in that** the rolling guide structure (290) further includes:
a first gear (292) disposed in the inner space and configured to rotate according to a movement of the slide structure (250),
at least one interlocking gear (294, 295) rotatably disposed to receive rotational force from the first gear (292), so that the at least one interlocking gear (294, 295) rotates when the first gear (292) rotates,
a second gear (293) rotatably disposed to receive rotational force from the at least one interlocking gear (294, 295), so that the second gear (293) rotates when the at least one interlocking gear (294, 295) rotates, and
a hooking structure for moving the bendable member (260) through rotation of the second gear (293),
wherein the hooking structure including:
a hooking hole (2932) formed at a designated position of the second gear (293), the hooking hole (2923) having a length in a radial direction from the center of the second gear (293), and
a hooking protrusion (2612) protruding outward through the spiral-shaped guide hole (2911) from at least a portion of the bendable member (260) and disposed to be hooked in the hooking hole (2932),
wherein the hooking protrusion (2612) is configured to move along the hooking hole (2932) and along the spiral-shaped guide hole (2911) by rotation of the second gear (293), thereby inducing the movement of the bendable member (260).

2. The electronic device of claim 1, wherein the bendable member (260) comprises a plurality of multi-bars (261) disposed to be rotatable with respect to each other and guide protrusions (2611) protruding from side surfaces of each of the plurality of multi-bars (261), wherein the bendable member (260) is configured to roll while the guide protrusions (2611) move along the spiral guide hole (2911).

3. The electronic device of claim 2, wherein the first gear (292) is disposed to mesh with the guide protrusions (2611) and is configured to rotate through movement of the guide protrusions (2611).

4. The electronic device of one of the claims 1 to 3, wherein the at least one interlocking gear (294, 295) is disposed to mesh with the first gear (292) and the second gear (293).

5. The electronic device of one of the claims 1 to 4, comprising a base bracket (240) that is disposed in the inner space of the housing (210) and to which the slide structure (250) is slidably coupled, wherein at least a portion of the guide bracket (291) is fixed to a side surface of the base bracket (240).

6. The electronic device of claim 5, wherein the first gear (292) is rotatably disposed on a first support shaft (242) protruding from a side surface of the base bracket (240).

7. The electronic device of claim 6, comprising, in the inner space, a support member (280) disposed along a second direction perpendicular to the first direction to support the rolled bendable member (260), wherein the support member (280) is fixed through each of the guide bracket (291) disposed on both side surfaces of the bendable member (260).

8. The electronic device of claim 7, comprising a second support shaft (281) protruding from a side surface of the support member (280) to penetrate through the guide bracket (291), wherein the second gear (293) is rotatably coupled to the second support shaft (281).

9. The electronic device of claim 8, further comprising a third gear disposed on the slide structure (250) and meshed with the first gear (292), wherein the first gear (292) is configured to rotate through the flow of the third gear by the movement of the slide structure.

10. The electronic device of claim 9, wherein the third gear comprises a rack gear (2514) formed on a side surface of the slide structure (250), and the first gear (292) comprises a pinion gear meshed with the rack gear (2514).

11. The electronic device of claim 10, wherein the at least one interlocking gear (294, 295) comprises:
a first interlocking gear (294) disposed on the guide bracket (291) and rotatably meshed with the first gear (292); and
a second interlocking gear (295) disposed on the guide bracket (291), connected to the first interlocking gear (294) through a power transmission member, and rotatably meshed with the second gear (293).

12. The electronic device of claim 11, wherein the power transmission member comprises a V-belt (296) connected to rotation shafts of the first gear (292) and the second gear (293).

13. The electronic device of one of the claims 1 to 12, wherein the bendable member (260) comprises a plurality of multi-bars (261) disposed to be rotatable with respect to each other, and the hooking protrusion (2612) is formed to protrude from both side surfaces of a multi-bar (261) disposed closest to the center of the second gear (293) among the plurality of multi-bars (261) in a state in which the bendable member (260) is rolled.

14. The electronic device of one of the claims 1 to 13, wherein the hooking hole (2932) is formed to have a straight length in a radial direction from the center of the second gear (293).

15. The electronic device of claim 14, wherein a length of the hooking hole (2932) is determined according to a rolling amount of the bendable member (260).

## Patentansprüche

1. Elektronische Vorrichtung, umfassend:
ein Gehäuse (210);
eine Gleitstruktur (250), die in einer ersten Richtung verschiebbar mit dem Gehäuse (210) gekoppelt ist;
ein biegbares Element (260), das mit der Gleitstruktur (250) verbunden ist und in einem Innenraum des Gehäuses (210) in einem Einschiebezustand aufgenommen ist;
eine flexible Anzeige (230), die angeordnet ist, um eine Stütze der Gleitstruktur (250) und des biegbaren Elements (260) aufzunehmen; und
eine Rollführungsstruktur (290), die angeordnet ist, um gegenüberliegenden Seitenflächen des biegbaren Elements (260) zugewandt zu sein, um mindestens einen Abschnitt des biegbaren Elements (260) und der flexiblen Anzeige (230) rollend aufzunehmen,
wobei
die Rollführungsstruktur (290) umfasst:
eine Führungshalterung (291), die im Innenraum angeordnet ist und ein spiralförmiges Führungsloch (2911) enthält,
**dadurch gekennzeichnet, dass** die Rollführungsstruktur (290) ferner umfasst:
ein erstes Zahnrad (292), das im Innenraum angeordnet und konfiguriert ist, um sich entsprechend einer Bewegung der Gleitstruktur (250) zu drehen,
mindestens ein Verriegelungszahnrad (294, 295), das drehbar angeordnet ist, um eine Drehkraft von dem ersten Zahnrad (292) aufzunehmen, so dass sich das mindestens eine Verriegelungszahnrad (294, 295) dreht, wenn sich das erste Zahnrad (292) dreht,
ein zweites Zahnrad (293), das drehbar angeordnet ist, um eine Drehkraft von dem mindestens einen Verriegelungszahnrad (294, 295) aufzunehmen, so dass sich das zweite Zahnrad (293) dreht, wenn sich das mindestens eine Verriegelungszahnrad (294, 295) dreht, und
eine Einhakstruktur zum Bewegen des biegbaren Elements (260) durch Drehung des zweiten Zahnrads (293),
wobei die Einhakstruktur umfasst:
ein Einhakloch (2932), das an einer bestimmten Position des zweiten Zahnrads (293) ausgebildet ist, wobei das Einhakloch (2923) eine Länge in einer radialen Richtung von der Mitte des zweiten Zahnrads (293) aufweist, und
einen Einhakvorsprung (2612), der durch das spiralförmige Führungsloch (2911) von mindestens einem Abschnitt des biegbaren Elements (260) nach außen vorsteht und angeordnet ist, um in das Einhakloch (2932) eingehakt zu werden,
wobei der Einhakvorsprung (2612) konfiguriert ist, um sich entlang des Einhaklochs (2932) und entlang des spiralförmigen Führungslochs (2911) durch Drehung des zweiten Zahnrads (293) zu bewegen, wodurch die Bewegung des biegbaren Elements (260) induziert wird.

2. Elektronische Vorrichtung nach Anspruch 1, wobei das biegbare Element (260) eine Vielzahl von Mehrfachstäben (261), die so angeordnet sind, dass sie in Bezug zueinander drehbar sind, und Führungsvorsprünge (2611), die von Seitenflächen jedes der Vielzahl von Mehrfachstäben (261) vorstehen, umfasst, wobei das biegbare Element (260) so konfiguriert ist, dass es rollt, während sich die Führungsvorsprünge (2611) entlang des Spiralführungslochs (2911) bewegen.

3. Elektronische Vorrichtung nach Anspruch 2, wobei das erste Zahnrad (292) so angeordnet ist, dass es mit den Führungsvorsprüngen (2611) in Eingriff steht und so konfiguriert ist, dass es sich durch die Bewegung der Führungsvorsprünge (2611) dreht.

4. Elektronische Vorrichtung nach einem der Ansprüche 1 bis 3, wobei das mindestens eine Verriegelungszahnrad (294, 295) so angeordnet ist, dass es mit dem ersten Zahnrad (292) und dem zweiten Zahnrad (293) in Eingriff steht.

5. Elektronische Vorrichtung nach einem der Ansprüche 1 bis 4, umfassend eine Basishalterung (240), die im Innenraum des Gehäuses (210) angeordnet ist und mit der die Gleitkonstruktion (250) verschiebbar gekoppelt ist, wobei mindestens ein Abschnitt der Führungshalterung (291) an einer Seitenfläche der Basishalterung (240) befestigt ist.

6. Elektronische Vorrichtung nach Anspruch 5, wobei das erste Zahnrad (292) drehbar auf einer ersten Stützwelle (242) angeordnet ist, die von einer Seitenfläche der Basishalterung (240) vorsteht.

7. Elektronische Vorrichtung nach Anspruch 6, umfassend, im Innenraum, ein Stützelement (280), das entlang einer zweiten Richtung senkrecht zur ersten Richtung angeordnet ist, um das gerollte biegbare Element (260) zu stützen, wobei das Stützelement (280) durch jede der Führungshalterung (291) befestigt ist, die auf beiden Seitenflächen des biegbaren Elements (260) angeordnet sind.

8. Elektronische Vorrichtung nach Anspruch 7, umfassend eine zweite Stützwelle (281), die von einer Seitenfläche des Stützelements (280) vorsteht, um durch die Führungshalterung (291) zu dringen, wobei das zweite Zahnrad (293) drehbar mit der zweiten Stützwelle (281) gekoppelt ist.

9. Elektronische Vorrichtung nach Anspruch 8, ferner umfassend ein drittes Zahnrad, das auf der Gleitstruktur (250) angeordnet ist und mit dem ersten Zahnrad (292) in Eingriff steht, wobei das erste Zahnrad (292) so konfiguriert ist, dass es sich durch die Bewegung der Gleitstruktur durch den Fluss des dritten Zahnrads dreht.

10. Elektronische Vorrichtung nach Anspruch 9, wobei das dritte Zahnrad ein auf einer Seitenfläche der Gleitstruktur (250) ausgebildetes Zahnstangengetriebe (2514) umfasst und das erste Zahnrad (292) ein mit dem Zahnstangengetriebe (2514) in Eingriff stehendes Ritzel umfasst.

11. Elektronische Vorrichtung nach Anspruch 10, wobei das mindestens eine Verriegelungszahnrad (294, 295) umfasst:
ein erstes Verriegelungszahnrad (294), das auf der Führungshalterung (291) angeordnet ist und drehbar mit dem ersten Zahnrad (292) in Eingriff steht; und
ein zweites Verriegelungszahnrad (295), das auf der Führungshalterung (291) angeordnet ist, mit dem ersten Verriegelungszahnrad (294) über ein Kraftübertragungselement verbunden ist und mit dem zweiten Zahnrad (293) drehbar in Eingriff steht.

12. Elektronische Vorrichtung nach Anspruch 11, wobei das Kraftübertragungselement einen V-Gurt (296) umfasst, der mit den Rotationswellen des ersten Zahnrads (292) und des zweiten Zahnrads (293) verbunden ist.

13. Elektronische Vorrichtung nach einem der Ansprüche 1 bis 12, wobei das biegbare Element (260) eine Vielzahl von Mehrfachstäben (261) umfasst, die so angeordnet sind, dass sie in Bezug zueinander drehbar sind, und der Einhakvorsprung (2612) so ausgebildet ist, dass er in einem Zustand, in dem das biegbare Element (260) gerollt ist, von beiden Seitenflächen eines Mehrfachstabs (261), der am nächsten zur Mitte des zweiten Zahnrads (293) angeordnet ist, unter der Vielzahl von Mehrfachstäben (261) hervorsteht.

14. Elektronische Vorrichtung nach einem der Ansprüche 1 bis 13, wobei das Einhakloch (2932) so ausgebildet ist, dass es eine gerade Länge in radialer Richtung von der Mitte des zweiten Zahnrads (293) aufweist.

15. Elektronische Vorrichtung nach Anspruch 14, wobei eine Länge des Einhaklochs (2932) entsprechend einem Rollbetrag des biegbaren Elements (260) bestimmt wird.

## Revendications

1. Dispositif électronique, comprenant :
un boîtier (210) ;
une structure de glissement (250) couplée de manière coulissante au boîtier (210) dans une première direction ;
un élément pliable (260) relié à la structure de glissement (250) et accueilli dans un espace intérieur du boîtier (210) dans un état de glissement vers l'intérieur ;
un affichage flexible (230) disposé pour recevoir du support de la structure de glissement (250) et de l'élément pliable (260) ;
une structure de guidage de roulement (290) disposée face à des surfaces latérales opposées de l'élément pliable (260) pour accueillir au moins une partie de l'élément pliable (260) et de l'affichage flexible (230) de manière roulante,
dans lequel
la structure de guidage de roulement (290) comprend :
un support de guidage (291) disposé dans l'espace intérieur et comprenant un trou de guidage en forme de spirale (2911),
**caractérisé en ce que** la structure de guidage de roulement (290) comprend en outre :
un premier pignon (292) disposé dans l'espace intérieur et configuré pour tourner en fonction d'un mouvement de la structure de glissement (250),
au moins un pignon de verrouillage (294, 295) disposé de manière rotative pour recevoir une force de rotation du premier pignon (292), de sorte que l'au moins un pignon de verrouillage (294, 295) tourne lorsque le premier pignon (292) tourne,
un deuxième pignon (293) disposé de manière rotative pour recevoir une force de rotation de l'au moins un pignon de verrouillage (294, 295), de sorte que le deuxième pignon (293) tourne lorsque l'au moins un pignon de verrouillage (294, 295) tourne, et
une structure d'accrochage pour déplacer l'élément pliable (260) par la rotation du deuxième pignon (293),
dans lequel la structure d'accrochage comprend :
un trou d'accrochage (2932) formé à une position désignée du deuxième pignon (293), le trou d'accrochage (2923) ayant une longueur dans une direction radiale à partir du centre du deuxième pignon (293), et
une saillie d'accrochage (2612) faisant saillie vers l'extérieur à travers le trou de guidage en forme de spirale (2911) à partir d'au moins une partie de l'élément pliable (260) et disposée pour être accrochée dans le trou d'accrochage (2932),
dans lequel la saillie d'accrochage (2612) est configurée pour se déplacer le long du trou d'accrochage (2932) et le long du trou de guidage en forme de spirale (2911) par rotation du deuxième pignon (293), induisant ainsi le mouvement de l'élément pliable (260).

2. Dispositif électronique de la revendication 1, dans lequel l'élément pliable (260) comprend une pluralité de multi-barres (261) disposées pour être rotatives les unes par rapport aux autres et des saillies de guidage (2611) faisant saillie à partir de surfaces latérales de chacune de la pluralité de multi-barres (261), dans lequel l'élément pliable (260) est configuré pour rouler tandis que les saillies de guidage (2611) se déplacent le long du trou de guidage en spirale (2911).

3. Dispositif électronique de la revendication 2, dans lequel le premier pignon (292) est disposé pour s'engrener avec les saillies de guidage (2611) et est configuré pour tourner moyennant le mouvement des saillies de guidage (2611).

4. Dispositif électronique de l'une des revendications 1 à 3, dans lequel l'au moins un pignon de verrouillage (294, 295) est disposé pour s'engrener avec le premier pignon (292) et le deuxième pignon (293).

5. Dispositif électronique de l'une des revendications 1 à 4, comprenant un support de base (240) qui est disposé dans l'espace intérieur du boîtier (210) et auquel la structure de glissement (250) est couplée de manière coulissante, dans lequel au moins une partie du support de guidage (291) est fixée à une surface latérale du support de base (240).

6. Dispositif électronique de la revendication 5, dans lequel le premier pignon (292) est disposé de manière rotative sur un premier arbre de support (242) faisant saillie à partir d'une surface latérale du support de base (240).

7. Dispositif électronique de la revendication 6, comprenant, dans l'espace intérieur, un élément de support (280) disposé le long d'une deuxième direction perpendiculaire à la première direction pour soutenir l'élément pliable roulé (260), dans lequel l'élément de support (280) est fixé à travers chacun du support de guidage (291) disposé sur les deux surfaces latérales de l'élément pliable (260).

8. Dispositif électronique de la revendication 7, comprenant un deuxième arbre de support (281) faisant saillie à partir d'une surface latérale de l'élément de support (280) pour pénétrer à travers le support de guidage (291), dans lequel le deuxième pignon (293) est couplé de manière rotative au deuxième arbre de support (281).

9. Dispositif électronique de la revendication 8, comprenant en outre un troisième pignon disposé sur la structure de glissement (250) et engrené avec le premier pignon (292), dans lequel le premier pignon (292) est configuré pour tourner à travers le flux du troisième pignon par le mouvement de la structure de glissement.

10. Dispositif électronique de la revendication 9, dans lequel le troisième pignon comprend un engrenage à crémaillère (2514) formé sur une surface latérale de la structure de glissement (250), et le premier pignon (292) comprend un engrenage à pignon engrené avec l'engrenage à crémaillère (2514).

11. Dispositif électronique de la revendication 10, dans lequel l'au moins un pignon de verrouillage (294, 295) comprend :
un premier pignon de verrouillage (294) disposé sur le support de guidage (291) et engrené de manière rotative avec le premier pignon (292) ; et
un deuxième pignon de verrouillage (295) disposé sur le support de guidage (291), relié au premier pignon de verrouillage (294) par l'intermédiaire d'un élément de transmission de force, et engrené de manière rotative avec le deuxième pignon (293).

12. Dispositif électronique de la revendication 11, dans lequel l'élément de transmission de force comprend une courroie en V (296) reliée aux arbres de rotation du premier pignon (292) et du deuxième pignon (293).

13. Dispositif électronique de l'une des revendications 1 à 12, dans lequel l'élément pliable (260) comprend une pluralité de multi-barres (261) disposées pour être rotatives les unes par rapport aux autres, et la saillie d'accrochage (2612) est formée pour faire saillie à partir des deux surfaces latérales d'une multi-barre (261) disposée le plus près du centre du deuxième pignon (293) parmi la pluralité de multi-barres (261) dans un état dans lequel l'élément pliable (260) est roulé.

14. Dispositif électronique de l'une des revendications 1 à 13, dans lequel le trou d'accrochage (2932) est formé pour avoir une longueur droite dans une direction radiale à partir du centre du deuxième pignon (293).

15. Dispositif électronique de la revendication 14, dans lequel une longueur du trou d'accrochage (2932) est déterminée en fonction d'une quantité de roulement de l'élément pliable (260).
